# FASCICULE DE BREVET EUROPEEN

(11) **EP 2 710 714 B1**
(45) Date de publication et mention de la délivrance du brevet: **29.07.2015**
(21) Numéro de dépôt: 12726152.7
(22) Date de dépôt: 03.05.2012
(51) Int. Cl.: H02K 7/18, H02K 21/12

(54) **TURBINE GÉNÉRATRICE DE COURANT ÉLECTRIQUE**
STROMERZEUGENDE TURBINE
ELECTRIC CURRENT GENERATING TURBINE

(30) Priorité: 16.05.2011 FR 1101475
(43) Date de publication de la demande: 26.03.2014
(73) Titulaire: SAVE Innovations, 38000 Grenoble (FR)
(72) Inventeur: PERRIERE, Bernard, F-38130 Echirolles (FR)
(74) Mandataire: Novaimo
(86) Numéro de dépôt international: PCT/FR2012/000173
(87) Numéro de publication internationale: WO 2012/156593

(56) Documents cités:
- WO-A2-2011/002979
- CA-A1- 2 345 508
- DE-U1- 20 203 119
- JP-A- 2005 237 128

## Description

### Domaine de l'invention

La présente invention concerne une turbine génératrice de courant électrique et plus particulièrement une turbine à fort rendement pouvant être entraînée par un fluide de faible vitesse.

### Exposé de l'art antérieur

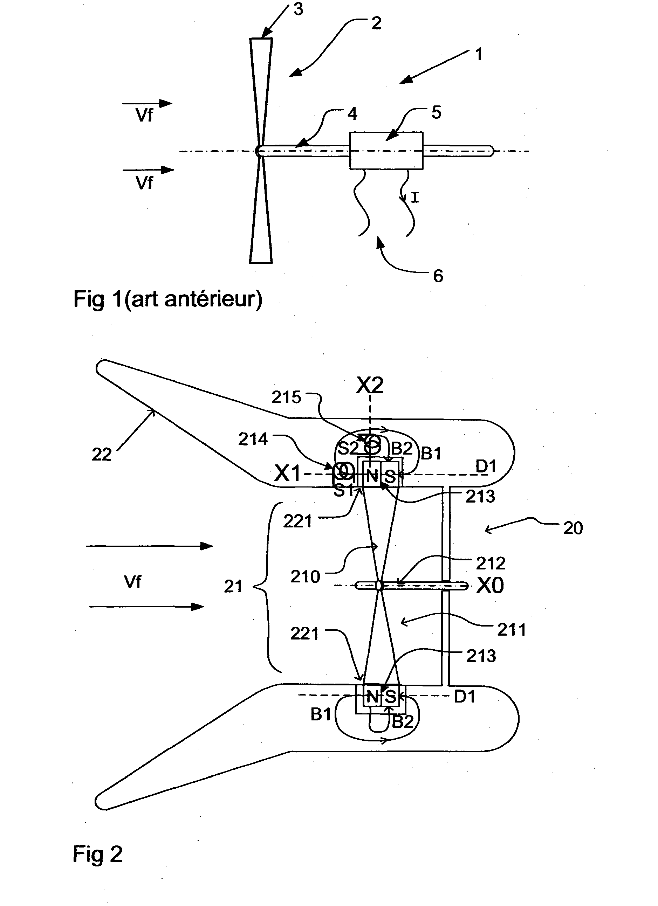

La figure 1 représente de façon schématique une turbine génératrice de courant électrique 1 selon l'art antérieur. Cette turbine est de type éolienne. Elle comprend une hélice 2 composée de pales 3 montées à rotation sur un arbre 4. L'arbre est relié à un générateur de courant, habituellement un alternateur 5, apte à fournir un courant électrique I à un réseau électrique 6. Lorsque le vent souffle à une vitesse Vf, l'énergie cinétique de ce fluide est transmise, par l'intermédiaire de l'hélice 2, à l'arbre 4 sous forme de puissance mécanique, entraînant la rotation de l'alternateur 5. L'alternateur 5 fournit alors un courant électrique I au réseau 6.

Il existe de nombreux types de turbines génératrices de courant électrique qui se différencient les unes des autres par le type du fluide entraînant les pales, par la forme des pales, et par le type de montage à rotation des pales autour d'un axe relié à un générateur de courant. Le rendement des turbines génératrices de courant de l'art antérieur est limité, en particulier lorsque la vitesse du fluide est faible. Les turbines de l'art antérieur sont lourdes, complexes et coûteuses. Il est difficile de réduire leur taille pour les rendre utilisables dans des équipements nomades pouvant être facilement déplacés et transportés.

Le document DE20203119 décrit une turbine dont le stator comporte des couples de bobines à axe de bobinage parallèles associés à un corps de fermeture magnétique, les bobines coopèrent avec un aimant monté sur un rotor.

### Résumé

Un objet d'un mode de réalisation de la présente invention est de proposer une turbine génératrice de courant ayant un rendement élevé.

Un autre objet d'un autre mode de réalisation de la présente invention est de proposer une turbine légère.

Ainsi un mode de réalisation de la présente invention prévoit une Turbine apte à générer un courant électrique qui comporte un rotor comportant une pale, montée à rotation autour d'un axe principal, et un aimant permanent monté sur la pale en position distale par rapport à l'axe principal, la turbine comportant en outre un stator muni de première et deuxième bobines dont les axes de bobinage sont sensiblement orthogonaux, l'aimant permanent coopérant avec lesdites première et deuxième bobines durant la rotation du rotor pour générer le courant électrique ladite première bobine étant proche de ladite deuxième bobine.

Selon un autre mode de réalisation de la présente invention, les première et deuxième bobines ont des noyaux en matériau non magnétique.

Selon un autre mode de réalisation de la présente invention, les première et deuxième bobines forment respectivement deux portions de bobinage d'une unique bobine discoïdale dont les axes de bobinage sont sensiblement orthogonaux.

Selon un autre mode de réalisation de la présente invention, l'aimant permanent est un aimant permanent dipolaire orienté parallèlement à l'axe principal de rotation de la pale.

Selon un autre mode de réalisation de la présente invention, l'aimant permanent comporte des aimants élémentaires conformés selon un réseau Halbach.

Selon un autre mode de réalisation de la présente invention, l'aimant permanent est monté sur la pale par l'intermédiaire d'une entretoise.

Selon un autre mode de réalisation de la présente invention, la pale constitue un élément d'une hélice montée à rotation autour de l'axe principal.

### Brève description des dessins

Ces objets, caractéristiques et avantages, ainsi que d'autres seront exposés en détail dans la description suivante de modes de réalisation particuliers faite à titre non limitatif en relation avec les figures jointes parmi lesquelles :
la figure 1 décrite précédemment est une vue schématique d'une turbine génératrice de courant électrique selon l'art antérieur ;
la figure 2 est une vue en coupe longitudinale d'une turbine génératrice de courant électrique selon un mode de réalisation de la présente invention ;
la figure 3 est une vue en perspective d'une bobine discoïdale à deux axes adaptée à un autre mode de réalisation de la présente invention ;
la figure 4 est une vue longitudinale d'un aimant permanent linéaire Halbach ; et
la figure 5 est une vue en coupe longitudinale d'une turbine génératrice de courant électrique utilisant un aimant permanent linéaire Halbach selon un autre mode de réalisation de la présente invention.

### Description détaillée

Par souci de clarté, seuls les éléments utiles à la compréhension de l'invention ont été représentés et seront décrits. Par souci de clarté, de mêmes éléments ont été désignés par de mêmes références aux différentes figures et, de plus, les diverses figures ne sont pas tracées à l'échelle. Afin de faciliter la description, la vitesse du fluide Vf est supposée être dirigée vers l'avant de la turbine. Dans la présente description une première direction est dite sensiblement orthogonale par rapport à une deuxième direction lorsque la première direction forme un angle de 90 degrés, en valeur absolue, à 30 degrés près, de préférence à 15 degrés près, avec la deuxième direction.

La figure 2 est une vue en coupe longitudinale d'une turbine génératrice de courant électrique 20 selon un mode de réalisation de la présente invention. La turbine 20 comporte un rotor 21 et un stator 22. Le rotor 21 comporte une pale 210, formant, par exemple, un élément d'une hélice 211, montée à rotation autour d'un axe principal X0 de rotation, préférentiellement sur un arbre 212. Le plan de coupe de la figure 2 contient cet axe principal X0 de rotation. La pale 210 est soumise à l'action d'un fluide incident dont la vitesse Vf est, par exemple, colinéaire à l'axe principal X0 de rotation. Le rotor 21 comporte, à une extrémité de la pale 210 distale de l'axe principal X0 de rotation, un aimant permanent 213, par exemple de type dipolaire, monté sur la pale 210. Dans le cas particulier de l'exemple de la figure 2, l'aimant permanent dipolaire 213, représenté dans le plan de coupe de la figure 2, forme un dipôle magnétique, dont l'axe D1 est parallèle à l'axe principal X0 de rotation, le pôle Nord N de l'aimant permanent dipolaire 213 étant dirigé vers l'avant de la turbine, c'est à dire faisant face au fluide. Un champ magnétique, ou induction magnétique, se développe tout autour de l'aimant. L'induction magnétique comporte une multitude de lignes de champ magnétique qui circulent du pôle Nord N vers le pôle Sud S par l'extérieur de l'aimant permanent dipolaire 213 selon un angle variable. Ainsi, par exemple, un premier ensemble de lignes de champ magnétique B1 sort de l'aimant permanent dipolaire 213 par le pôle Nord N, et traverse une première région 214, proche du pôle Nord N de l'aimant permanent dipolaire 213. Dans cette première région 214, située à l'extrémité de l'aimant permanent dipolaire 213 et sur l'axe D1 du dipôle magnétique, les lignes de champ magnétique sont parallèles à l'axe D1 du dipôle magnétique et à l'axe principal X0 de rotation. Ensuite les lignes de champ du premier ensemble des lignes de champ magnétique B1 s'incurvent pour rejoindre le pôle Sud S de l'aimant permanent dipolaire 213. Par exemple, un deuxième ensemble de lignes de champ magnétique B2 sort de l'aimant permanent dipolaire 213 par le pôle Nord N et traverse une deuxième région 215, proche du pôle Nord N de l'aimant permanent dipolaire 213. Dans cette deuxième région 215 située latéralement à l'aimant dipolaire permanent 213 les lignes de champ magnétique sont orthogonales à l'axe D1 du dipôle magnétique et à l'axe principal X0 de rotation. Ensuite les lignes de champ du deuxième ensemble des lignes de champ magnétique B2 s'incurvent pour rejoindre le pôle Sud S de l'aimant permanent dipolaire 213. Les première et deuxième régions 214 et 215 traversées par l'induction magnétique de l'aimant permanent dipolaire 213, sont définies dans un repère géométrique tournant attaché à l'aimant permanent dipolaire 213. Les lignes de champ magnétique dans la première région 214 sont sensiblement orthogonales aux lignes de champ magnétique dans la deuxième région 215.

Le stator 22, entourant par exemple le rotor 21, comporte, par exemple, une rainure annulaire 221 formée dans le plan dans lequel s'inscrit la rotation de l'aimant permanent dipolaire 213 de la pale 210. La rainure 221 est conformée pour recevoir l'aimant permanent dipolaire 213 durant sa rotation autour de l'axe principal X0 de rotation.

Le stator 22 comporte une première bobine S1 et une deuxième bobine S2, par exemple des solénoïdes. Les première et deuxième bobines S1 et S2 sont positionnées dans le stator 22 de façon à ce qu'elles se trouvent simultanément et respectivement dans les première et deuxième régions 214 et 215 lorsque l'aimant permanent 213 est, par effet de sa rotation autour de l'axe principal X0 de rotation, proximal respectivement de la première bobine S1 et de la deuxième bobine S2. Les première et deuxième bobines sont proches l'une de l'autre. En d'autres termes, les première et deuxième bobines S1 et S2 sont proches si, pour une position de l'aimant 213, elles sont soumises simultanément au champ magnétique de l'aimant 213 de sorte à pouvoir générer un courant ou une tension, cette définition pouvant s'appliquer à tous les modes de réalisation de la présente invention. Par exemple, la première bobine est proche de la deuxième bobine lorsque la distance séparant les première et deuxième bobines est de l'ordre de grandeur de la dimension de l'aimant permanent, par exemple inférieure à cinq fois la distance entre le pôle Nord N et le pôle Sud S de l'aimant permanent dipolaire 213. Les premier et deuxième axes de bobinage X1 et X2 des bobine S1 et S2 sont sensiblement orthogonaux de façon à être tangents aux lignes de champ de l'induction magnétique de l'aimant permanent dipolaire 213 lorsque l'aimant permanent dipolaire 213 est, par effet de sa rotation autour de l'axe principal X0 de rotation, proximal de la première bobine S1 et de la deuxième bobine S2. Les variations des flux de l'induction magnétique, générées par l'aimant permanent dipolaire 213 en rotation autour de l'axe principal X0 de rotation, dans les première S1 et deuxième S2 bobines sont maximales puisque les flux magnétiques sont orientés respectivement selon les axes de bobinage X1 et X2 des première et deuxième bobines S1 et S2. Il en résulte des tensions induites aux bornes des première et deuxième bobines S1 et S2 maximales et aptes à générer un courant maximum dans une impédance connectée aux bornes des bobines. L'aimant permanent dipolaire 213 coopère avec les première et deuxième bobines S1 et S2, proches l'une de l'autre, dont les axes de bobinage X1 et X2 sont sensiblement orthogonaux pour générer un courant électrique maximum. Le rendement maximum pour la turbine 20, durant la rotation du rotor 21, est ainsi obtenu.

Le nombre de bobines du stator n'est pas limité. D'autres bobines peuvent être placées afin de coopérer avec différents ensembles de lignes de champ magnétique dans différentes régions, situées autour de l'aimant dipolaire permanent 213, afin de coopérer avec le maximum de lignes de champ magnétique.

Notamment, grâce à la disposition des bobines S1 et S2, il n'est pas nécessaire de placer dans le stator 22 des pièces polaires métalliques coûteuses et lourdes afin d'orienter, de canaliser ou d'augmenter l'induction magnétique dans les bobines puisque les différentes bobines sont placées et orientées dans les régions où l'induction magnétique devient maximale lors du passage de l'aimant permanent dipolaire 213. Selon un mode particulier de réalisation de la présente invention, le noyau des différentes bobines est constitué d'un matériau non magnétique. Ce matériau non magnétique peut être constitué, par exemple, d'une résine de moulage formant le stator 22.

Les bobines coopérant avec un champ magnétique peuvent être des solénoïdes, ainsi qu'il a été supposé pour le mode de réalisation décrit en relation avec la figure 2. Elles peuvent être également de type discoïdal. Une bobine discoïdale est formée par des spires enroulées dans un même plan, avec un rayon d'enroulement variable. L'axe de bobinage discoïdal est l'axe perpendiculaire au plan des spires de la bobine passant par le centre de la surface définie par les spires. La bobine discoïdale peut généralement être substituée à un solénoïde, notamment pour les modes de réalisation de la présente invention décrits ci-dessus en relation avec la figure 2.

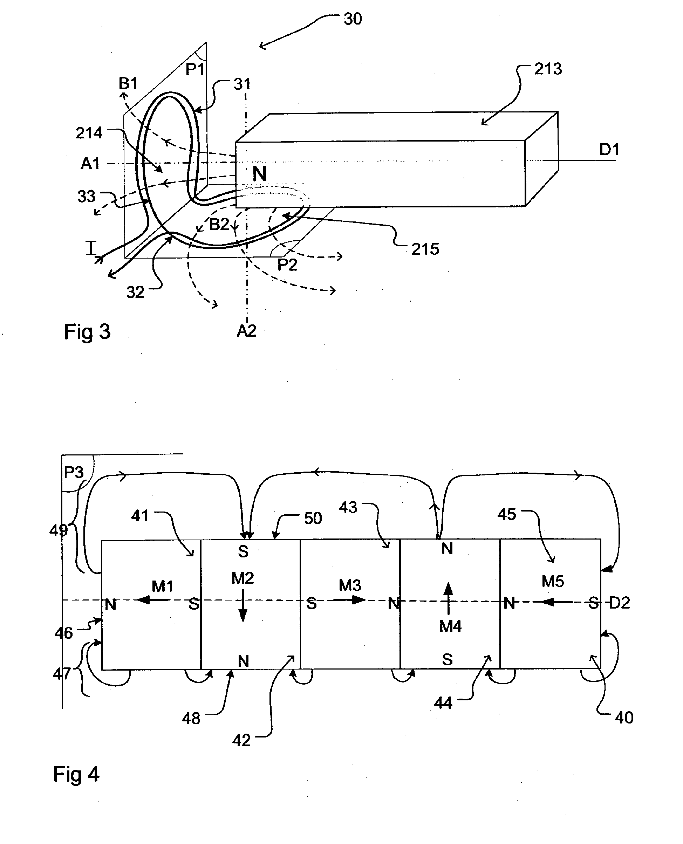

La figure 3 est une vue en perspective, selon un autre mode de réalisation de la présente invention, d'une bobine discoïdale 30 munie de deux portions discoïdales dont les axes de bobinage sont sensiblement orthogonaux. Autrement dit ce mode de réalisation diffère du mode de réalisation décrit en relation avec la figure 2 en ce que les première et deuxième bobines S1 et S2 forment respectivement deux portions de bobinage d'une unique bobine discoïdale 30, les axes de bobinage A1 et A2 desdites portions étant sensiblement orthogonaux.

Un fil, par exemple en cuivre, forme une première spire 31 sensiblement circulaire dans un premier plan P1 autour d'un premier axe de bobinage discoïdal A1 puis le fil continue selon une deuxième spire 32, sensiblement circulaire, dans un deuxième plan P2 orthogonal au premier plan P1 autour d'un deuxième axe de bobinage discoïdal A2. Ensuite, le fil de la deuxième spire continue de nouveau dans le premier plan P1 pour former une troisième spire 33 sensiblement circulaire autour du premier axe de bobinage discoïdal A1 et ainsi de suite jusqu'à former une bobine discoïdale 30 comportant de nombreuses spires et possédant une première portion avec un premier axe discoïdal A1 et une deuxième portion avec un deuxième axe discoïdal A2 sensiblement orthogonal au premier axe discoïdal A1.

La bobine discoïdale 30, à deux axes de bobinage discoïdal sensiblement orthogonaux, est positionnée dans le stator, de façon à ce que les axes de bobinage discoïdal orthogonaux A1 et A2, soient tangents aux lignes de champ de l'induction magnétique de l'aimant permanent dipolaire 213, par exemple respectivement dans les première 214 et deuxième 215 régions, lorsque l'aimant permanent dipolaire 213 est proximal de la bobine discoïdale 30, par effet de la rotation de l'aimant permanent dipolaire 213 autour de l'axe principal X0 de rotation.

La figure 4 est une vue longitudinale d'un aimant permanent linéaire Halbach. Il est connu de l'art antérieur des aimants permanents constitués d'aimants dipolaires élémentaires assemblés de telle façon que l'induction magnétique soit concentrée et focalisée dans des directions privilégiées. Ces aimants dipolaires forment alors un réseau Halbach. Par exemple le brevet US 7,598,646 B2 par sa figure 1 sous la référence 120 décrit un aimant permanent linéaire Halbach, reporté sur la présente figure 4 avec la référence 40. L'aimant permanent linéaire Halbach 40 est formé par l'assemblage, dans cet ordre, selon un axe D2 dans un plan d'assemblage P3 de cinq aimants dipolaires permanents élémentaires successifs : un premier aimant élémentaire 41, un deuxième aimant élémentaire 42, un troisième aimant élémentaire 43, un quatrième aimant élémentaire 44 et un cinquième aimant élémentaire 45. Chacun de ces cinq aimants dipolaires élémentaires possède un moment magnétique interne, respectivement un premier moment magnétique M1, un deuxième moment magnétique M2, un troisième moment magnétique M3, un quatrième moment magnétique M4, un cinquième moment magnétique M5, orientés du pôle Sud vers le pôle Nord de l'aimant dipolaire permanent élémentaire concerné. Le moment magnétique interne, est symbolisé sur la figure 4 par une flèche dirigée du pôle Sud S vers le pôle Nord N de chaque aimant dipolaire. Dans l'exemple de l'aimant permanent linéaire Halbach 40 de la figure 4, le premier moment magnétique M1 du premier aimant élémentaire 41 est dirigé selon l'axe D2 de l'aimant permanent linéaire Halbach 40 vers l'extrémité libre 46 du premier aimant élémentaire 41. Ensuite, dans le plan d'assemblage P3 des cinq aimants élémentaires 41, 42, 43, 44, 45 le moment magnétique de chaque aimant élémentaire subséquent 42, 43, 44, 45 forme avec le moment magnétique de l'aimant élémentaire le précédent 41, 42, 43, 44 un angle orienté de +90 degrés. L'aimant permanent linéaire Halbach 40 ainsi construit développe, dans le plan d'assemblage P3, une induction magnétique faible 47 sur un premier côté 48 de l'aimant permanent linéaire Halbach 40 situé du côté du pôle Nord du deuxième aimant élémentaire 42. Le premier côté 48 de l'aimant permanent linéaire Halbach 40 est parallèle à l'axe D2 de l'aimant permanent linéaire Halbach 40. Une induction magnétique forte 49 se déploie sur un deuxième côté 50 de l'aimant permanent linéaire Halbach 40 opposé au premier côté 48 et situé dans le plan d'assemblage P3 de l'aimant permanent linéaire Halbach 40.

Sur le deuxième côté 50 de l'aimant permanent linéaire Halbach 40 et en conséquence de la disposition des moments magnétiques M1, M2, M3 , M4 et M5 des cinq aimants élémentaires, l'induction magnétique située du deuxième côté 50 est perpendiculaire à l'axe D2 de l'aimant permanent linéaire Halbach 40 à proximité des parties centrales des deuxième 42 et quatrième 44 aimants élémentaires. L'induction magnétique située du deuxième côté 50 est parallèle à l'axe D2 de l'aimant permanent linéaire Halbach 40 à proximité de la partie centrale du troisième aimant élémentaire 43.

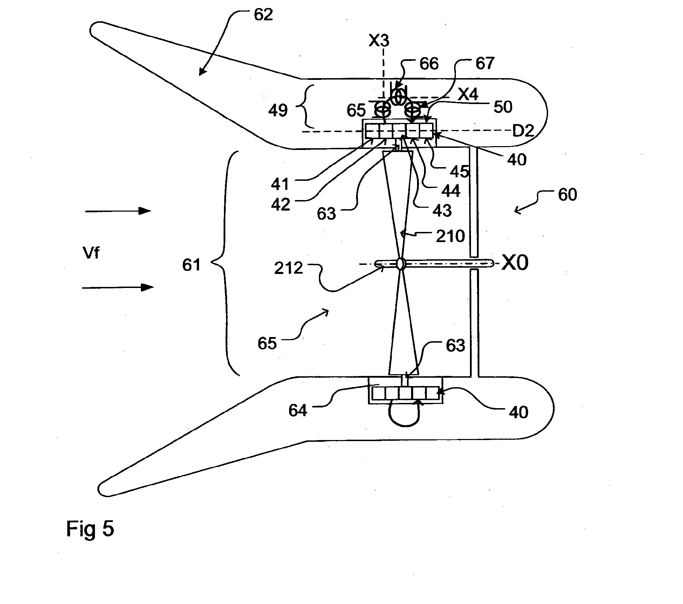

La figure 5 est une vue en coupe longitudinale d'une turbine 60 génératrice de courant électrique utilisant l'aimant permanent linéaire Halbach 40 décrit en relation avec la figure 4, selon un autre mode de réalisation de la présente invention. La turbine 60 comporte un rotor 61 et un stator 62 similaires au rotor et au stator décrits en relation avec la figure 2. Le rotor 61 comporte la pale 210 montée à rotation autour de l'axe principal X0 de rotation, préférentiellement sur l'arbre 212. La pale 210 comporte à une extrémité distale de l'axe principal X0 de rotation l'aimant permanent linéaire Halbach 40 décrit en relation avec la figure 4. L'aimant permanent linéaire Halbach 40 est monté sur la pale 210, par exemple, par l'intermédiaire d'une entretoise 63. Par exemple, l'aimant permanent linéaire Halbach 40 est positionné sur la pale 210 de façon à ce que son plan d'assemblage P3 contienne l'axe principal X0 de rotation de la pale et que l'axe D2 de l'aimant permanent linéaire Halbach 40 soit parallèle à l'axe principal X0 de rotation. L'aimant permanent linéaire Halbach 40 est préférentiellement positionné pour que l'induction magnétique forte 49 se déploie à l'extérieur de la circonférence décrite par l'aimant permanent linéaire Halbach 40 lors de la rotation de la pale autour de l'axe principal X0 de rotation.

Le stator 62 comporte une rainure annulaire 64 formée dans le plan dans lequel s'inscrit la rotation de l'aimant permanent linéaire Halbach 40 de la pale 210. La rainure 64 est conformée pour recevoir l'aimant permanent linéaire Halbach 40 et pour laisser passer l'entretoise 63 durant leurs rotations autour de l'axe principal X0 de rotation. D'autre part le stator comporte une bobine radiale 65 et une bobine axiale 66. L'axe de bobinage X3 de la bobine radiale 65 est sécant à l'axe principal X0 de rotation et forme avec celui-ci un angle droit. L'axe de bobinage X4 de la bobine axiale 66 est parallèle à l'axe principal X0 de rotation. Il en résulte que les axes de bobinage respectifs X3 et X4 de la bobine radiale et de la bobine axiale sont sensiblement orthogonaux. La bobine radiale 65 est à la fois à l'extérieur et dans le plan du cylindre dans lequel s'inscrit la rotation du deuxième aimant élémentaire 42 de l'aimant permanent linéaire Halbach 40. La bobine axiale 66 est à l'extérieur et dans le plan du cylindre dans lequel s'inscrit la rotation du troisième aimant élémentaire 43 de l'aimant permanent linéaire Halbach 40. La bobine radiale 65 est dite proche de la bobine axiale 66 car la distance séparant les bobines radiale 65 et axiale 66 est, par exemple, inférieure à cinq fois la longueur de l'aimant permanent linéaire Halbach 40. Lorsque, par effet de la rotation de la pale autour de l'axe principal X0 de rotation, l'aimant permanent linéaire Halbach 40 est simultanément proximal de la bobine radiale 65 et de la bobine axiale 66, les lignes de champ de l'induction magnétique forte 49 de l'aimant permanent linéaire Halbach s'alignent avec l'axe de bobinage X3 de la bobine radiale 65 et l'axe de bobinage X4 de la bobine axiale 66. Durant la rotation de la pale 210 autour de l'axe principal X0 de rotation, la bobine radiale 65 et la bobine axiale 66 coopèrent avec l'induction magnétique forte 49 de l'aimant permanent linéaire Halbach 40. La bobine radiale 65 et la bobine axiale 66 sont aptes à générer un courant induit I. Avantageusement une deuxième bobine axiale 67 peut être positionnée dans le rotor 62 afin de coopérer avec le champ magnétique fort 49 dans une région située au droit du quatrième aimant élémentaire 44.

La présente invention est applicable quelque soit la forme des pales et la position de l'axe de rotation par rapport aux pales. Les matériaux constituant le rotor peuvent être très variés. Ils sont de préférence non magnétiques. Le fluide entraînant la pale est quelconque. Il doit être adapté au type de pale et peut être liquide ou gazeux, en particulier minéral ou biologique. Les dimensions de la turbine sont quelconques. En particulier l'invention permet la miniaturisation de la turbine et même son intégration avec des techniques de micromécanique, puisque, dans ce cas, il n'est pas nécessaire de placer dans le stator des pièces polaires métalliques dont la réalisation est problématique. Les faibles masses en mouvement, les dimensions réduites sont favorables à un fonctionnement optimum de la turbine avec des vitesses de fluide faible. Dans les modes de réalisation décrits, le rotor n'est pas attiré par des masses magnétiques du stator. Le rotor peut alors avoir une faible masse car il n'a pas besoin d'être très rigide. Il en résulte également que l'on peut maintenir le rotor par sustentation magnétique et supprimer les paliers mécaniques associés à l'arbre de rotation. On gagne ainsi encore en légèreté et en possibilité de miniaturisation.

Le type de turbine décrit peut être utilisé en milieu hostile car les aimants sont partiellement protégés dans une cavité étroite, les bobines peuvent être fixées sur le stator ou bien être noyées dans le matériau constituant le stator. De manière générale et applicable à tous les modes de réalisation, décrits ci-avant de la présente invention, l'aimant permanent peut être monté sur la pale par l'intermédiaire d'une entretoise. Dans ce cas la cavité entourant et protégeant l'aimant permanent peut être conçue pour entourer l'aimant permanent sur toutes ses faces en laissant juste le passage de l'entretoise. De plus, dans le cas de l'utilisation d'une entretoise, l'aimant permanent étant écarté de la pale par l'entretoise, il devient possible de positionner des bobines, pour collecter le courant, dans le volume libéré entre l'aimant permanent et la pale.

Les possibilités de former des aimants permanents, de les associer, de générer des réseaux de Halbach, de positionner les aimants vis à vis de l'axe de rotation sont infinies. En particulier il est possible, sur un même rotor d'assembler des pales comportant chacune, par exemple, des aimants dipolaires d'orientation différente. Nous avons décrit seulement quelques exemples typiques. Il en existe beaucoup d'autre que l'homme du métier pourra facilement concevoir en utilisant l'enseignement de la présente invention. De même il existe de très nombreuses possibilités pour concevoir la forme et les matériaux des bobines. Il existe également de très nombreuses possibilités pour agencer la position des bobines dans l'induction magnétique variable générée par les aimants permanents. Enfin il est aisé d'utiliser l'enseignement de la présente invention pour combiner divers éléments des divers modes de réalisation pour concevoir une turbine.

## Revendications

1. Turbine (20, 60) apte à générer un courant électrique (I) comportant un rotor (21, 61) comportant une pale (210), montée à rotation autour d'un axe principal (X0), et un aimant permanent (213, 40) monté sur la pale (210) en position distale par rapport à l'axe principal (X0), la turbine (20, 60) comportant en outre un stator (22, 62) muni de première et deuxième bobines (S1, S2, 30, 65, 66), l'aimant permanent (213, 40) coopérant avec lesdites première et deuxième bobines (S1, S2, 30, 65, 66) durant la rotation du rotor (21, 61) pour générer le courant électrique (I), ladite première bobine étant proche de ladite deuxième bobine, **caractérisée en ce que** les axes de bobinage (X1, X2, X3, X4, A1, A2) des première et deuxième bobines sont sensiblement orthogonaux.

2. Turbine (20, 60) selon la revendication 1, dans laquelle les première et deuxième bobines (S1, S2, 30, 65, 66) ont des noyaux en matériau non magnétique.

3. Turbine (20, 60) selon la revendication 2, dans laquelle les première et deuxième bobines (S1, S2, 65, 66) forment respectivement deux portions de bobinage d'une unique bobine discoïdale (30), les axes de bobinage (A1, A2) desdites portions étant sensiblement orthogonaux.

4. Turbine (20, 60) selon l'une des revendications précédentes, dans laquelle l'aimant permanent est un aimant permanent dipolaire (213) orienté parallèlement à l'axe principal (X0) de rotation de la pale (210).

5. Turbine (20, 60) selon l'une des revendications 1 à 3, dont l'aimant permanent comporte des aimants élémentaires (41, 42, 43, 44, 45) conformés selon un réseau Halbach (40).

6. Turbine (20, 60) selon l'une quelconque des revendications précédentes, dans laquelle l'aimant permanent (213, 40) est monté sur la pale (210) par l'intermédiaire d'une entretoise (63).

7. Turbine (20, 60) selon l'une quelconque des revendications précédentes, dans laquelle la pale (210) constitue un élément d'une hélice (211) montée à rotation autour de l'axe principal (X0).

## Patentansprüche

1. Zur Erzeugung eines elektrischen Stroms (I) fähige Turbine (20, 60), die einen Rotor (21, 61) umfasst, der eine Schaufel (210), die um eine Hauptachse (X0) drehbar befestigt ist, und einen Permanentmagnet (213, 40), der an der Schaufel (210) in distaler Position bezüglich der Hauptachse (X0) befestigt ist, umfasst, wobei die Turbine (20, 60) des Weiteren einen Stator (22, 62) umfasst, der mit einer ersten und einer zweiten Spule (S1, S2, 30, 65, 66) versehen ist, wobei der Permanentmagnet (213, 40) während der Drehung des Rotors (21, 61) zur Erzeugung des elektrischen Stroms (I) mit der ersten und zweiten Spule (S1, S2, 30, 65, 66) zusammenwirkt, wobei sich die erste Spule in der Nähe der zweiten Spule befindet, **dadurch gekennzeichnet, dass** die Wicklungsachsen (X1, X2, X3, X4, A1, A2) der ersten und zweiten Spule im Wesentlichen orthogonal sind.

2. Turbine (20, 60) nach Anspruch 1, wobei die erste und zweite Spule (S1, S2, 30, 65, 66) Kerne aus nichtmagnetischem Material haben.

3. Turbine (20, 60) nach Anspruch 2, wobei die erste und zweite Spule (S1, S2, 65, 66) jeweilig zwei Wicklungsabschnitte einer einzigen diskoiden Spule (30) bilden, wobei die Spulenachsen (A1, A2) dieser Abschnitte im Wesentlichen orthogonal sind.

4. Turbine (20, 60) nach einem der vorhergehenden Ansprüche, wobei der Permanentmagnet ein zweipoliger Permanentmagnet (213) ist, der parallel zur Hauptdrehachse (X0) der Schaufel (210) ausgerichtet ist.

5. Turbine (20, 60) nach einem der Ansprüche 1 bis 3, deren Permanentmagnet Elementarmagneten in einem Halbach-Array (40) umfasst.

6. Turbine (20, 60) nach einem der vorhergehenden Ansprüche, wobei der Permanentmagnet (213, 40) mit einem Zwischenstück (63) an der Schaufel (210) befestigt ist.

7. Turbine (20, 60) nach einem der vorhergehenden Ansprüche, wobei die Schaufel (210) Teil eines Turbinenrads (211) ist, das um die Hauptachse (X0) drehbar angeordnet ist.

## Claims

1. Turbine (20, 60) able to generate an electric current (I) comprising a rotor (21, 61) comprising a blade (210) which is mounted so as to rotate about a main axis (X0), and a permanent magnet (213, 40) mounted on the blade (210) at a position which is the most distant from the main axis (X0), the turbine (20, 60) further comprising a stator (22, 62) provided with first and second coils (S1, S2, 30, 65, 66), the permanent magnet (213, 40) collaborating with said first and second coils (S1, S2, 30, 65, 66) as the rotor (21, 61) rotates in order to generate electric current (I), said first coil being close to said second coil **characterized in that** the axes of winding (X1, X2, X3, X4, A1, A2) of the first and second coils are substantially orthogonal.

2. Turbine (20, 60) as claimed in claim 1, in which the first and second coils (S1, S2, 30, 65, 66) have cores made of non-magnetic material.

3. Turbine (20, 60) as claimed in claim 2, in which the first and second coils (S1, S2, 65, 66) respectively form two winding portions of one and the same diskoid coil (30), the axes of winding (A1, A2) of said portions being substantially orthogonal.

4. Turbine (20, 60) as claimed in one of the preceding claims, in which the permanent magnet is a permanent dipole magnet (213) oriented parallel to the main axis (X0) of rotation of the blade (210).

5. Turbine (20, 60) as claimed in one of claims 1 to 3, of which the permanent magnet comprises elementary magnets (41, 42, 43, 44, 45) configured as a Halbach array (40).

6. Turbine (20, 60) as claimed in any one of the preceding claims, in which the permanent magnet (213, 40) is mounted on the blade (210) via a spacer piece (63).

7. Turbine (20, 60) as claimed in any one of the preceding claims, in which the blade (210) constitutes part of an impeller (211) mounted to rotate about the main axis (X0).
